# EUROPÄISCHE PATENTANMELDUNG

(11) **EP 2 329 995 A1**
(43) Veröffentlichungstag der Anmeldung: **08.06.2011**
(21) Anmeldenummer: 10015335.2
(22) Anmeldetag: 06.12.2010
(51) Int. Cl.: B60R 21/015, B60N 2/56

(54) **Verfahren zur kapazitiven Sitzbelegungserkennung**

(30) Priorität: 07.12.2009 DE 102009056971
(71) Anmelder: Hirschmann Automotive GmbH, 6830 Rankweil-Brederis (AT)
(72) Erfinder: Dengler, Werner, 5132 Geretsberg (AT)
(74) Vertreter: Greif, Thomas

(57) **Zusammenfassung**

Die Erfindung betrifft ein Verfahren zur Erkennung, ob ein Sitz, insbesondere ein Sitz eines Fahrzeuges, von einer Person oder einem Gegenstand belastet oder leer ist, wobei erfindungsgemäß vorgesehen ist, dass die Erkennung kapazitiv durchgeführt wird, wobei zumindest zwei Messelektroden in dem Sitz mit einer vorgebbaren Frequenz betrieben werden und der sich durch die jeweilige Belastung oder die Leere des Sitzes ergebende Verlustwinkel bestimmt wird, wobei der Verlustwinkel ein Mass für die jeweilige Belastung oder die Leere des Sitzes Ist.

## Beschreibung

Die Erfindung betrifft ein Verfahren zur Erkennung, ob ein Sitz, insbesondere ein Sitz eines Fahrzeuges, von einer Person oder einem Gegenstand belastet oder leer Ist, gemäß den Merkmalen des Oberbegriffes des Patentanspruches 1.

Nach technischem Stand gibt es Sitzbelegungserkennungen in Fahrzeugen in unterschledilchen Ausführungen. Die größte Anzahl bilden sogenannte Beltreminder (mit Ihnen wird geprüft, ob der Gurt angelegt Ist oder nicht, realisiert durch die Erfassung eines Gurtschlossschalters), die lediglich ein Signal "Sitz belastet" oder "Sitz unbelastet" liefern, Andere Systeme wie induktive oder Gewicht messende Systeme tragen lediglich zur Unterscheidung von Erwachsenem und Kind bei.

Allen Systemen ist gleich, dass sie entweder ungenügende Informationen liefern und/oder entsprechend teuer zu realisieren sind.

Die Informationen, wer sitzt wie auf dem Sitz, um Airbags, Gurtstraffer usw. zu steuern, stehen gar nicht zur Verfügung.

Kapazitive Systeme wurden bisher lediglich In Laboren aufgebaut und intern in diesen getestet. Diese sind jedoch nicht verlässlich in der Lage, lebendes Gewebe auf dem Sitz zu erkennen. Ein weiterer Nachteil ist der Sitzaufbau, was zur Folge hat, dass entweder die Signalgebung abgeschirmt wird oder durch die Sitzheizung kein Empfang mehr möglich ist.

Es soll ein System gefunden werden, das günstig in der Umsetzung ist und zugleich umfangreiche Parameter vorzugsweise zur Steuerung eines Sicherheitssystems liefert.

Der Erfindung liegt die Aufgabe zugrunde, ein Verfahren zur Erkennung, ob ein Sitz, insbesondere ein Sitz eines Fahrzeuges, von einer Person oder einem Gegenstand belastet oder leer ist, anzugeben, das kostengünstig in der Realisierung ist und zugleich umfangreiche Parameter zur Steuerung nachgeschalteter Systeme, insbesondere Sicherheitssysteme, liefert.

Diese Aufgabe ist durch die Merkmale des Patentanspruches 1 gelöst.

Erfindungsgemäß ist vorgesehen, dass die Erkennung kapazitiv durchgeführt wird, wobei zumindest zwei Messelektroden in dem Sitz, vorzugsweise im Bereich der Sitzfläche des Sitzes, mit einer vorgebbaren Frequenz betrieben werden und der sich durch die jeweilige Belastung oder die Leere des Sitzes ergebende Verlustwinkel bestimmt wird, wobei der Verlustwinkel ein Maß für die jeweilige Belastung oder die Leere des Sitzes ist.

Durch die kapazitive Erkennung, ob der Sitz von einer Person oder einem Gegenstand belastet oder leer ist, können die gegenüber anders arbeitenden Verfahren sich ergebenden Nachteile wirksam vermieden werden. Insbesondere arbeitet das erfindungsgemäße Verfahren berührungslos und genau, so dass die jeweiligen Zustände des Sitzes verlässlich erkannt werden können. Somit ist es mit dem erfindungsgemäßen Verfahren nicht nur möglich, ob sich etwas auf dem Sitz befindet oder ob dieser leer ist, sondern es kann auch unterschieden werden, ob auf dem Sitz eine Person sitzt oder ein Gegenstand abgelegt wurde, wobei weiterhin in vorteilhafter Weise bei Belastung nicht nur zwischen einer Person und einem Gegenstand unterschieden werden kann, sondern auch beispielsweise innerhalb der Belastung des Sitzes mit einer Person unterschieden werden kann, ob sich ein Kind oder eine Erwachsener auf dem Sitz befindet. Gleiches gilt auch für die Belastungen des Sitzes mit einem Gegenstand. Ein entscheidender Vorteil des kapazitiven Verfahrens zur Erkennung der Sitzbelegung ist darin zu sehen, dass das lebende Gewebe von Personen sich Im höherfrequenten Bereich deutlich von Gegenständen wie z. B. Wasser, Einkaufskörben, Kunststofftüten und dergleichen, mit denen neben Personen üblicherweise Sitze auch beladen werden, unterscheidet.

Die Belegung (oder nicht) sowie die Art der Belegung des Sitzes wird insbesondere dadurch erfasst, dass an die Messelektroden (ein Paar oder mehr als ein Paar) eine vorgegebene Hochfrequenz angelegt wird und die sich durch die Belegung oder Nicht-Belegung einstellende Kapazität und der Widerstand ausgewertet werden. Die Messelektroden bilden einen realen Kondensator, der parasitäre ohmsche Verluste aufweist. Diese ohmschen Verluste sowie die Belegung oder Nicht-Belegung bewirken, dass die Phasenverschiebung zwischen Strom und Spannung an den Klemmen der den realen Kondensator bildenden Messelektroden nicht mehr genau 90° beträgt, sondern um den Verlustwinkel reduziert ist. Dieser Winkel wird als Tangens ausgedrückt und heißt dann Verlustfaktor. Er ergibt sich aus dem Tangens des Phasenwinkels zwischen der geometrischen Summe der kapazitiven und induktiven Blindwiderstände und dem Ersatzreihenwideretand. Somit lässt sich bei der vorgebbaren Hochfrequenz die Kapazität und der Widerstand feststellen und daraus der Verlustwinkel ableiten, der ein Maß für die Belegung oder Nicht-Belegung des Sitzes ist.

In Weiterbildung der Erfindung ist vorgesehen, dass als Messelektroden die elektrischen Leiter einer Sitzheizung des Sitzes verwendet werden. Es ist bekannt, dass Sitze, vorzugsweise Fahrer- und Beifahrersitze, aber auch Sitze im Fond, eines Fahrzeuges mit einer Sitzheizung ausgestattet sind. Diese Sitzheizung ist durch mäanderförmig ausgelegte elektrische Leiter unterhalb der Sitzfläche des Sitzes oder mit einer entsprechend gestalteten Heizungsmatte ausgerüstet, wobei eine solche Sitzheizung temperaturgesteuert oder manuell ein- bzw. ausgeschaltet werden kann. Zu diesem Zweck wird an die elektrischen Leiter eine Gleichspannung des Fahrzeuges angelegt, wobei sich die Heizwirkung aus der Spannung bzw. der Dauer der angelegten Spannung ergibt Üblicherweise kann die Leistung einer solchen Sitzhelzung und damit die Temperatur stufenweise oder stufenlos eingesteilt werden. In diesem Zusammenhang ist es von besonderem Vorteil, wenn die elektrischen Leiter (Plus und Minus bei einer Gleichspannungsversorgung Im Fahrzeug) gänzlich über ihre Länge oder Abschnittsweise als Messelektroden verwendet werden. Über entsprechende Zuleitungen kann von einer Messvorrichtung die vorgebbare Frequenz (Wechselspannung) an die elektrischen Leiter angelegt und durch die Leere oder Belastung des Sitzes sich einstellende Kapazität bzw. der sich daraus ergebende Verlustwinkel bestimmt werden, wobei dann der Verlustwinkel das Maß für die Jeweilige Belastung oder die Leere des Sitzes ist.

In diesem Zusammenhang ist in Weiterbildung der Erfindung für den Fall, dass die Sitzheizung ausgeschaltet oder eingeschaltet ist, folgendes vorgesehen.

Für den Fall, dass die Sitzheizung ausgeschaltet ist, werden bei ausgeschalteter Sitzheizung die Messelektroden (entweder die separaten Messelektroden oder die elektrischen Leiter der Sitzheizung, die als Mosselektroden fungieren) direkt mit der vorgegebenen Frequenz betrieben und die Sitzbelegung oder die Leere des Sitzes erfasst. Damit kann das erfindungsgemäße kapazitive Verfahren bei ausgeschalteter Sitzheizung direkt durch geführt werden, da in einem solchen Fall die an die elektrischen Leiter der Sitzheizung angelegte Spannung, die dann nicht vorhanden ist, nicht stört, die ansonsten zu einer Verfälschung der Messergebnisse führen würde.

Für den Fall, dass die Sitzheizung eingeschaltet ist, wird bei eingeschalteter Sitzheizung die Sitzheizung kurzzeitig, insbesondere intervallmäßig kurzzeltig ausgeschaltet und während dieses Zeitraumes werden die Messelektroden mit der vorgegebenen Frequenz betrieben und wird die Sitzbelegung erfasst. Da es entweder gar nicht oder nur mit Verfälschung der Messergebnisse möglich ist, bei eingeschalteter Sitzheizung das erfindungsgemäße kapazitive Verfahren durchzuführen, wird also das Messverfahren und der Betrieb der Sitzheizung intervalimaßig und alternierend hintereinander durchgeführt. D. h., dass während eines Intervalles, währenddessen die Sitzheizung eingeschaltet ist, keine Messung durchgeführt wird und umgekehrt, die Messung dann durchgeführt wird, wenn die Sitzheizung kurzzeitig ausgeschaltet ist. Die Intervalle, während der die Sitzheizung eingeschaltet ist und während der die Messung durchgeführt wird, kennen gleich lang sein. Sie sind vorzugsweise aber deutlich voneinander verschieden, so dass beispielsweise die Sitzheizung während einiger Sekunden eingeschaltet bleibt, wohingegen die Messung bei abgeschalteter Sitzheizung für einige Millisekunden durchgeführt wird. Hierzu sind eine Steuerschaltung für die Steuerung der Sitzheizung und eine entsprechende Messschaltung für den Betrieb des Mesaverfahrens vorhanden, wobei diese beiden Schaltungen auch in einer gemeinsamen Steuereinrichtung untergebracht sein können. Auch bei diesem intervallartigen Betrieb von Sitzheizung und Messverfahren können zusätzlich zu den elektrischen Leitern der Sitzheizung separate Messelektroden vorhanden sein oder es werden die elektrischen Leiter der Sitzheizung über ihre gesamte Länge oder über einen definierten Abschnitt als Mosselektroden eingesetzt.

In Weiterbildung der Erfindung werden die elektrischen Leiter der Sitzheizung in mehreren Abschnitten, d. h. segmentweise, als Messelektroden betrieben. Durch diese geeignete, insbesondere paarweise Segmentierung der elektrischen Leiter der Sitzheizung, vorzugsweise auf drei bis acht Segmente, kann bei Messung der Parameter der so entstandenen Messelektroden nicht nur auf die Größe der auf dem Sitz sitzenden Person, sondern auch seine Sitzhaltung und eventueller Missbrauch erkannt werden. Gleiches gilt auch für Gegenstände. die sich auf dem Sitz befinden.

In Weiterbildung der Erfindung wird die Erfassung mit einer Frequenz größer als ein Megahertz (1 MHz) durchgeführt. Der Frequenzbereich oberhalb von einem Megahertz hat den Vorteil, dass sich lebendes Gewebe in diesem höherfrequenten Bereich deutlich von beispielsweise Wasser, Einkaufskorb, Kunststofftüten oder dergleichen unterscheidet. Bei Durchführung des efindungsgemäßen kapazitiven Verfahrens zur Sitzbelegungserkennung oberhalb dieser Frequenz ergeben sich Je nach Sitzbelegung mit einer Person oder einem Gegenstand deutlich voneinander unterschiedliche Verlustwinkel, so dass diese erfasst und ausgewertet werden können. Vorzugsweise bei der Anwendung des erfindungsgemäßen Verfahrens im fahrzeugtechnischen (automotiven) Bereich sollte die vorgegebene Frequenz nach oben hin begrenzt werden, um nicht andere Fahrzeugsysteme, die in einem weiter höherfrequenten Bereich arbeiten, zu stören oder um durch diese höheren Frequenzen verursachten unerwünschten Störstrahlungen in niederfrequent arbeitende Systeme zu vermeiden. So kann beispielsweise daran gedacht werden, dass die Erfassung mit einer Frequenz größer als ein Megahertz und kleiner als 50 Megahertz, vorzugsweise kleiner als 10 Megahertz, durchgeführt wird, um somit noch höherfrequente Abstrahlungen (z. B, Störstrahlungen in Radio-, Mobilfunk-, Fernseh- oder Navigationssysteme) zu vermeiden.

Die vorstehenden Ausführungen werden zur Verdeutlichung noch einmal wie folgt zusammengefasst.

Die Nachteile der kapazitiven Lösungsansätze werden im vorgestellten System wirkungsvoll vermieden.

Im Gegensatz zu handelsüblichen kapazitiven Schaitungen Ist die Auswertung so ausgelegt, dass der Frequenzbereich zur Messung direkt festgelegt werden kann.

Die Erfindung nutzt die Erkenntnis, dass lebendes Gewebe sich im höherfrequenten Bereich deutlich von bspw. Wasser, Einkaufskorb, Kunststofftüten, usw. unterscheidet.

Durch die Bestimmung der Kapazitäten, des Verlustwinkels und damit der Güte kann mit Sicherheit lebendes Gewebe erkannt werden.

Um die abschirmende Wirkung der Sitzheizung zu eliminieren und die Messelektroden so nahe wie möglich an die Sitzoberfläche zu bringen, wird zur Kopazitätsmessung die Sitzheizung als Messelektroden verwendet. Dies hat zum Vorteil, dass kein zusätzlicher Aufwand wie Elektrodeneinarbeitung, Verkabelung, usw. notwendig wird.

Die Funktion der Sitzheizung wird durch Abschaltung der Leistung für einige Millisekunden und Umschaltung der Elektronik zwischen Heizung und Messung der Belegung realisiert.

Durch geeignete Segmentierung der Sitzheizung, vorzugsweise auf 3 bis 8 Segmente, kann bei Messung der Parameter der so entstandenen Elektroden nicht nur auf die Größe des Sitzenden, sondern auch seine Sitzhaltung und eventueller Missbrauch erkannt werden.

Diese Daten können je nach nachfolgender Elektronik zur Steuerung von Gurtstraffern, Airbags, Gurtschloss, Fahrzeugfederung, Fahrzeugneigung in Längs- und/oder Querrichtung usw. benutzt werden.

Entscheldender Vorteil ist, dass bereits existierende Komponenten benutzt werden können und zudem millionenfech verbaute existierende einzelverdrahtete Sitzbeiegungserkennungen eingespart werden.

Der zusätzliche Informationsgewinn trägt zur effizienten Steigerung der Kfz-Sicherheitssysteme bei.

Das System ist für alle Arten von Sitzen geeignet. Bei Verbau einer Sitzheizung wird diese zur Messung benutzt. Fahrzeuge ohne Sitzheizung werden mit entsprechenden Elektroden im Sitzgewebe ausgerüstet.

Der Einsatz von Originalhersteller-Sitzheizungen wird zu Lasten des Nachrüstgeschäftes forciert.

## Patentansprüche

1. Verfahren zur Erkennung, ob ein Sitz, insbesondere ein Sitz eines Fahrzeuges, von einer Person oder einem Gegenstand belastet oder leer ist, **dadurch gekennzeichnet, dass** die Erkennung kapazitiv durchgeführt wird, wobei zumindest zwei Messelektroden in dem Sitz mit einer vorgebbaren Frequenz betrieben werden und der sich durch die Jeweilige Belastung oder die Leere des Sitzes ergebende Verlustwinkel bestimmt wird, wobei der Verlustwinkel ein Mass für die jeweilige Belastung oder die Leere des Sitzes Ist.

2. Verfahren nach Anspruch 1, **dadurch gekennzeichnet, dass** als Messelektroden die elektrischen Leiter einer Sitzheizung des Sitzes verwendet werden.

3. Verfahren nach Anspruch 2, **dadurch gekennzeichnet, dass** bei ausgeschalteter Sitzheizung die Messelektroden direkt mit der vorgegebenen Frequenz betrieben werden und die Sitzbelegung erfasst wird.

4. Verfahren nach Anspruch 2, **dadurch gekennzeichnet, dass** bei eingeschalteter Sitzheizung die Sitzheizung kurzzeitig ausgeschaltet wird und während dieses Zeitraumes die Messelektroden mit der vorgegebenen Frequenz betrieben werden und die Sltzbelegung erfasst wird.

5. Verfahren nach zumindest einem der vorhergehenden Ansprüche 2 bis 4, **dadurch gekennzeichnet, dass** die elektrischen Leiter der Sitzheizung abschnittsweise als Messelektroden betrieben werden.

6. Verfahren nach Anspruch 5, **dadurch gekennzeichnet, dass** die elektrischen Leiter der Sitzheizung in mehreren Abschnitten als Messelektroden betrieben werden.

7. Verfahren nach einem der vorhergehenden Ansprüche, **dadurch gekennzeichnet, dass** die Erfassung mit einer Frequenz größer als 1 MHz durchgeführt wird.
